(19) Europäisches Patentamt
European Patent Office
Office européen des brevets

(11) **EP 3 972 112 A1**

(12) **EUROPÄISCHE PATENTANMELDUNG**

(43) Veröffentlichungstag:
**23.03.2022   Patentblatt 2022/12**

(21) Anmeldenummer: **21196771.6**

(22) Anmeldetag: **15.09.2021**

(51) Internationale Patentklassifikation (IPC):
**H02M 7/48** (2007.01)   **H02M 7/53** (2006.01)
**H02M 7/5395** (2006.01)   **H02M 1/44** (2007.01)
**H02M 1/12** (2006.01)   **H02M 7/493** (2007.01)

(52) Gemeinsame Patentklassifikation (CPC):
**H02M 7/48; H02M 1/12; H02M 1/44; H02M 7/493;
H02M 7/53; H02M 7/5395**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **18.09.2020   DE 102020211718**

(71) Anmelder: **Siemens Aktiengesellschaft
80333 München (DE)**

(72) Erfinder:
- **Drangmeister, Harald
  74074 Heilbronn (DE)**
- **Kipphan, Christoph
  74743 Seckach (DE)**
- **Meissinger, Sven
  74889 Sinsheim (DE)**
- **Greulich, Andreas
  69168 Wiesloch (DE)**

(54) **NETZEINSPEISEWECHSELRICHTER**

(57)    Die Erfindung betrifft einen Netzeinspeisewechselrichter (1) und eine Energieversorgungsanlage mit einem solchen Netzeinspeisewechselrichter (1). Der Netzeinspeisewechselrichter (1) besitzt einen Anschluss für wenigstens eine Gleichspannungsquelle (2), einen Pufferkondensator (5), der ausgebildet ist, über den Anschluss empfangene elektrische Energie zu puffern, und wenigstens eine mit dem Pufferkondensator (5) und einem Taktgenerator (6) verbundenen Netzeinspeiseeinheit (4). Die Netzeinspeiseeinheit (4) ist dabei dazu ausgebildet, in dem Pufferkondensator (5) gepufferte elektrische Energie durch ein von dem Taktgenerator (6) erzeugtes Taktsignal mit einer Taktfrequenz getaktet in eine Wechselspannung wechselzurichten und in ein Versorgungsnetz (3) einzuspeisen. Der Taktgenerator (6) ist dazu ausgebildet, die Taktfrequenz gemäß einer Frequenzvorgabe (f) zu erzeugen. Erfindungsgemäß ist außerdem eine mit dem Taktgenerator (6) verbundene Frequenzvorgabeeinheit (7) vorgesehen, welche dazu ausgebildet ist, eine zwischen einer unteren Grenzfrequenz ($f_{min}$) und einer oberen Grenzfrequenz ($f_{max}$) variierende Frequenzvorgabe (f) an den Taktgenerator (6) auszugeben.

FIG  1

EP 3 972 112 A1

**Beschreibung**

Technisches Gebiet

Die Erfindung betrifft einen Netzeinspeisewechselrichter und eine Energieversorgungsanlage mit einem solchen Netzeinspeisewechselrichter.

Technischer Hintergrund

Energieversorgungsanlagen kommt wegen der erneuerbaren Natur der genutzten Primärenergiequelle immer größere Bedeutung zu. Da Solarzellen und Batterien prinzipbedingt eine Gleichspannung erzeugen, die üblichen Versorgungsnetze aber mit einer Wechselspannung betrieben werden, werden Netzeinspeisewechselrichter verwendet, um die Gleichspannung in eine geeignete Wechselspannung umzusetzen. Netzeinspeisewechselrichter verwenden hierbei Halbleiterschalter, die von einem Taktsignal gesteuert durchgeschaltet werden und über das Tastverhältnis, mit dem ein jeweiliger Halbleiterschalter durchgeschaltet wird, im Mittel einen gewünschten Spannungspegel am Ausgang des Netzeinspeisewechselrichters einstellen. Dabei kann die typischerweise sinusförmige gewünschte Wechselspannung nur näherungsweise dargestellt werden, zudem erzeugen die Schaltvorgänge Störungen. Die Abweichungen von der idealen Wechselspannung können als Oberschwingungen angesehen werden, die das Versorgungsnetz stören und zu elektromagnetischer Abstrahlung auf den Kabelstrecken des Versorgungsnetzes führen, weshalb Grenzwerte definiert wurden. Die Grenzwerte können oft nur erreicht werden, indem Netzfilter vorgesehen werden, die mit Induktivitäten und/oder Kapazitäten die unerwünschten Oberschwingungen dämpfen. Problematisch hierbei sind die durch den zusätzlichen Schaltungsaufwand gesteigerten Kosten, das vergrößerte Bauvolumen, das erhöhte Gewicht und der reduzierte Wirkungsgrad der Energieversorgungsanlage.

Die Erfindung macht es sich daher zur Aufgabe, einen verbesserten Netzeinspeisewechselrichter und eine verbesserte Energieversorgungsanlage bereitzustellen. Die Erfindung löst dieses Problem durch einen Netzeinspeisewechselrichter gemäß Anspruch 1 und eine Energieversorgungsanlage gemäß Anspruch 12.

Zusammenfassung der Erfindung

Ein erster Erfindungsaspekt betrifft einen Netzeinspeisewechselrichter mit einem Anschluss für wenigstens eine Gleichspannungsquelle, einem Pufferkondensator, der ausgebildet ist, über den Anschluss empfangene elektrische Energie zu puffern, und wenigstens einer mit dem Pufferkondensator und einem Taktgenerator verbundenen Netzeinspeiseeinheit. Die Netzeinspeiseeinheit ist dabei dazu ausgebildet, in dem Pufferkondensator gepufferte elektrische Energie durch ein von dem Taktgenerator erzeugtes Taktsignal mit einer Taktfrequenz getaktet in eine Wechselspannung wechselzurichten und in ein Versorgungsnetz einzuspeisen. Der Taktgenerator ist dazu ausgebildet, die Taktfrequenz gemäß einer Frequenzvorgabe zu erzeugen. Erfindungsgemäß ist außerdem eine mit dem Taktgenerator verbundene Frequenzvorgabeeinheit vorgesehen, welche dazu ausgebildet ist, eine zwischen einer unteren Grenzfrequenz und einer oberen Grenzfrequenz variierende Frequenzvorgabe an den Taktgenerator auszugeben.

Der Netzeinspeisewechselrichter der Erfindung besitzt den Vorteil, dass der Aufwand für ein Netzfilter reduziert werden kann, ohne die Grenzwerte für das Störspektrum zu verletzen, indem die Taktfrequenz der Netzeinspeiseeinheit variiert wird. Die Variation der Taktfrequenz hat die Wirkung, dass die Energie der Oberschwingungen über das Frequenzspektrum verteilt wird, wodurch Spitzen im Frequenzspektrum bedämpft werden. Dadurch kann ein höherer Anteil an von Netzeinspeisewechselrichtern eingespeister Energie im Versorgungsnetz erreicht werden, ohne eine unerwünscht hohe elektromagnetische Abstrahlung zu bewirken. Außerdem wird die elektromagnetische Abstrahlung signifikant reduziert.

Als Gleichspannungsquelle kann wenigstens ein Photovoltaik-Panel oder auch eine Batterie - gegebenenfalls gleichzeitig mit dem wenigstens einen Photovoltaik-Panel - an den Netzeinspeisewechselrichter angeschlossen werden.

Bevorzugt ist die Frequenzvorgabeeinheit dazu ausgebildet, die Frequenzvorgabe sinusförmig zwischen der unteren Grenzfrequenz und der oberen Grenzfrequenz zu variieren. Durch die sinusförmige Variation der Frequenzvorgabe werden kaum zusätzlichen Störfrequenzen über die Frequenzvorgabe in das resultierende Spektrum der in das Versorgungsnetz eingespeisten Energie eingebracht.

Alternativ kann die Frequenzvorgabeeinheit dazu ausgebildet sein, die Frequenzvorgabe zufällig oder pseudozufällig zwischen der unteren Grenzfrequenz und der oberen Grenzfrequenz zu variieren. Dadurch weist die Frequenzvorgabe, wenn sie selbst als Signal betrachtet wird, ein Spektrum mit einer über die Frequenzen gleichverteilten Energie auf, was ebenfalls zu einem vorteilhaften resultierenden Spektrum führen kann.

Es kann auch vorgesehen sein, den Frequenzbereich zwischen der unteren Grenzfrequenz und der oberen Grenzfrequenz in eine Mehrzahl von gleich breiten Frequenzbändern aufzuteilen und die Frequenzvorgabe so zu variieren, dass über einen Bezugszeitraum gemittelt für jedes einzelne Frequenzband gleich lang eine entsprechende Frequenzvorgabe an den Taktgenerator ausgegeben wird. Diese Vorgehensweise kann mit einer pseudozufälligen Variation der Frequenzvorgabe vorteilhaft kombiniert werden.

Die Frequenzvorgabeeinheit kann dazu ausgebildet sein, die Frequenzvorgabe einen Frequenzbereich zwischen der unteren Grenzfrequenz und der oberen Grenzfrequenz in einer Zeitspanne von 2 Sekunden wenigstens einmal überstreichen zu lassen. Dadurch wird sichergestellt, dass das Verteilen der Oberwellen über das Spektrum innerhalb eines geeigneten Zeitraums geschieht. Beispielsweise kann die Frequenzvorgabe gemäß einer Dreieck- oder Sägezahnfunktion mit einer Steigung von wenigstens (obere Grenzfrequenz minus untere Grenzfrequenz) geteilt durch zwei Sekunden variiert werden.

Vorzugsweise ist die obere Grenzfrequenz wenigstens 500 Hertz (Hz), besonders bevorzugt wenigstens 1000 Hertz, höher als die untere Grenzfrequenz. Insbesondere kann die obere Grenzfrequenz wenigstens

$$\frac{7500\ Hz}{2 \cdot ceil\left(\frac{75\ kHz}{f_{min}} - \frac{1}{2}\right) + 1}$$

höher sein als die untere Grenzfrequenz, wobei die Funktion ceil() eine Aufrundungsoperation (ceil(x) mit x einer reellen Zahl ergibt die kleinste ganze Zahl, die größer oder gleich x ist) und $f_{min}$ die untere Grenzfrequenz bezeichnen. Für untere Grenzfrequenzen von 150 Kilohertz und höher ergibt sich also ein Frequenzunterschied von wenigstens 7500 Hertz, bei 50 Kilohertz bis weniger als 150 Kilohertz wenigstens 2500 Hertz, bei 30 Kilohertz bis weniger als 50 Kilohertz wenigstens 1500 Hertz und bei 150/7≈21,4 Kilohertz bis weniger als 30 Kilohertz wenigstens 833 Hertz. Dadurch wird gewährleistet, dass eine Oberwelle im Störspektrum über mehr als ein Messintervall von 7,5 Kilohertz Bandbreite der EMV-Verträglichkeitsprüfung verteilt wird und somit die Leistung dieser Oberwelle über benachbarte Messintervalle verteilt wird.

Die obere Grenzfrequenz wird üblicherweise höchstens doppelt so hoch sein wie die untere Grenzfrequenz. Vorzugsweise ist die obere Grenzfrequenz höchstens 7500 Hertz höher als die untere Grenzfrequenz. Da die Messintervalle der EMV-Verträglichkeitsprüfung 7500 Hertz weit sind, wird eine größere Variation der Taktfrequenz des Einspeisewechselrichters keine weitere Verbesserung bringen, da alle Spitzen im Störspektrum bereits aus dem aktuellen Messintervall herausgeschoben wurden. Die untere Grenzfrequenz kann beispielsweise 20 bis 200 Kilohertz betragen.

Bei bevorzugten Ausführungsformen der Erfindung ist die obere Grenzfrequenz kleiner als $\frac{150\ kHz}{n}$ und größer als $\frac{150\ kHz}{n} - 2\ kHz$, wobei n eine ganze Zahl größer als 0 und kleiner als 13 ist. Je nachdem, wie weit die obere Grenzfrequenz unter der unteren Grenze von 150 Kilohertz der EMV-Verträglichkeitsprüfung liegt, wird eine andere Oberwelle als niedrigste Oberwelle im Messbereich liegen. Bei einer Taktfrequenz von genau 50 Kilohertz wird die dritte Oberwelle bei 150 Kilohertz als niedrigste Oberwelle im Messbereich erscheinen, bei einer Taktfrequenz von genau 30 Kilohertz die fünfte usw. Es ist daher vorteilhaft, die obere Grenzfrequenz unterhalb dieser Stufen zu wählen, da auf diese Weise erst eine Oberwelle einer höheren Ordnung im Messbereich erscheint, diese aber prinzipiell eine niedrigere Störleistung besitzt. Vorzugsweise ist die obere Grenzfrequenz deshalb nicht mehr als 2 Kilohertz kleiner als eine solche Stufe.

Der Netzeinspeisewechselrichter kann mehrere Netzeinspeiseeinheiten besitzen, deren Ausgänge miteinander verbunden sind. Der Taktgenerator ist dabei dazu ausgebildet, jeder der Netzeinspeiseeinheiten ein jeweiliges Taktsignal gemäß einer jeweiligen Frequenzvorgabe bereitzustellen. Die Frequenzvorgabeeinheit ist dazu ausgebildet, die jeweiligen Frequenzvorgaben zwischen der unteren Grenzfrequenz und der oberen Grenzfrequenz variierend an den Taktgenerator auszugeben und jede jeweilige Frequenzvorgabe mit einem jeweiligen zeitlichen Verlauf, der sich von den zeitlichen Verläufen der anderen Frequenzvorgaben unterscheidet, zu variieren. Auf diese Weise wird sichergestellt, dass die jeweiligen Frequenzvorgaben nur selten oder niemals gleich sind, also die einzelnen Netzeinspeiseeinheiten möglichst unterschiedliche Oberwellenspektren erzeugen. Dadurch kann für eine gegebene Gesamtleistung des Netzeinspeisewechselrichters eine noch bessere Verteilung der Oberwellen erreicht werden.

Beispielsweise können die jeweiligen zeitlichen Verläufe zueinander zeitlich verschoben sein. Dieser einfache Ansatz bietet sich insbesondere bei einer sinusförmigen oder einer pseudozufälligen Variation der Frequenzvorgabe an.

Die jeweiligen Taktsignale der Netzeinspeiseeinheiten können zueinander phasenverschoben sein. Dadurch wird eine zusätzliche Reduktion der Oberwellen erreicht. Zusätzlich ist es möglich, die Phasenverschiebung der Taktsignale gegeneinander zu variieren, um eine noch bessere Wirkung zu erzielen.

Ein zweiter Aspekt der Erfindung führt eine Energieversorgungsanlage mit einem erfindungsgemäßen Netzeinspeisewechselrichter und wenigstens einer mit dem Anschluss des Netzeinspeisewechselrichters verbundenen Gleichspannungsquelle ein. Die Energieversorgungsanlage kann zwischen der wenigstens einen Gleichspannungsquelle und dem Pufferkondensator einen DC/DC-Steller, insbesondere einen Hochsetzsteller, aufweisen, um die Ausgangsspannung der wenigstens einen Gleichspannungsquelle auf ein für das Wechselrichten geeignetes Niveau umzusetzen. Der DC/DC-Steller kann hierzu vorteilhaft in den Netzeinspeisewechselrichter integriert werden. Besonders bevorzugt kann die wenigstens eine Gleichspannungsquelle wenigstens ein Photovoltaik-Panel und/oder eine Batterie umfassen.

Kurzbeschreibung der Abbildungen

Die Erfindung wird nachfolgend anhand von Abbildungen von Ausführungsbeispielen näher erläutert. Es zeigen:

Figur 1 eine Energieversorgungsanlage mit einem Ausführungsbeispiel eines erfindungsgemäßen Netzeinspeisewechselrichters;

Figur 2 ein erstes Transientendiagramm mit beispielhaften Frequenzvorgaben;

Figur 3 ein zweites Transientendiagramm mit einer beispielhafte Frequenzvorgabe; und

Figur 4 ein drittes Transientendiagramm mit einer beispielhafte Frequenzvorgabe.

Ausführliche Beschreibung der Abbildungen

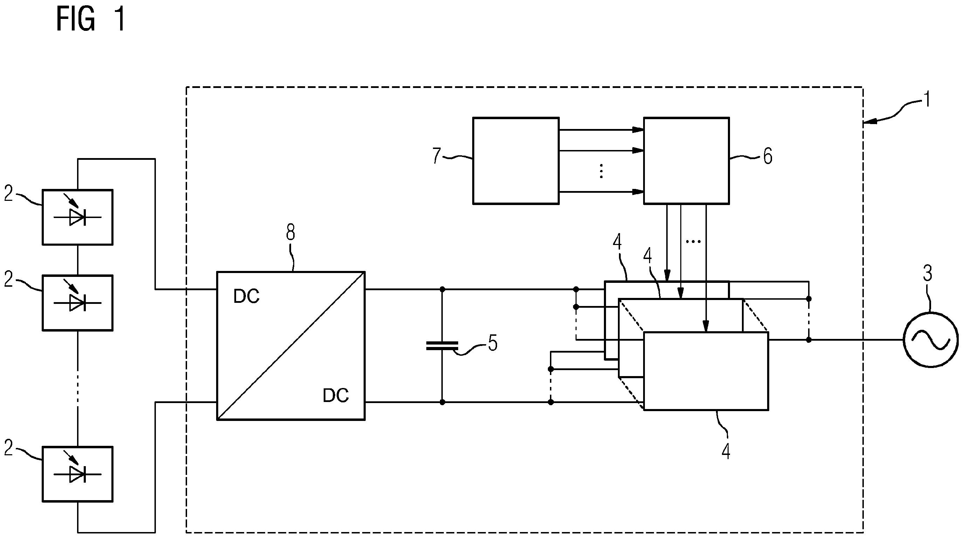

Figur 1 zeigt eine Energieversorgungsanlage mit einem Ausführungsbeispiel eines erfindungsgemäßen Netzeinspeisewechselrichters 1, an den eingangsseitig eine Mehrzahl von Photovoltaik-Panels 2 angeschlossen sind. Anstelle der Photovoltaik-Panels 2 könnte beispielsweise auch eine Batterie an den Netzeinspeisewechselrichter 1 angeschlossen sein. Ebenso sind erfindungsgemäße Netzeinspeisewechselrichter 1 möglich, an die sowohl Photovoltaik-Panels als auch eine Batterie angeschlossen sind.

Der Netzeinspeisewechselrichter 1 ist ausgangsseitig mit einem Versorgungsnetz 3 verbunden, in das der Netzeinspeisewechselrichter 1 von den Photovoltaik-Panels 2 bereitgestellte elektrische Energie als Wechselstrom einspeist. Im gezeigten Beispiel ist das Versorgungsnetz 3 einphasig dargestellt, im meist verbreiteten Anwendungsfall wird das Versorgungsnetz 3 jedoch dreiphasig ausgeführt sein, so dass der Netzeinspeisewechselrichter 1 entsprechend mit drei Ausgängen für jeweilige Wechselströme ausgestattet wird.

Der Netzeinspeisewechselrichter 1 des Beispiels von Figur 1 ist mit einem DC/DC-Steller 8 ausgestattet, der die von der Anzahl der Photovoltaik-Panels 2 abhängige Ausgangsspannung in eine für das Wechselrichten geeignet große und konstante Gleichspannung umsetzt, welche von einem Pufferkondensator 5 gepuffert wird. Es sind selbstredend auch mehrpolige Varianten von der Erfindung erfasst, wobei beispielsweise eine Serienschaltung mehrerer Kondensatoren als Pufferkondensator 5 möglich ist.

Der Netzeinspeisewechselrichter 1 von Figur 1 umfasst mehrere parallelgeschaltete Einspeiseeinheiten 4, die mit von einem Taktgenerator 6 bereitgestellten jeweiligen Taktsignalen betrieben werden. Jede Einspeiseeinheit 4 erzeugt den gewünschten Wechselstrom, indem sie wahlweise einen der Pole des Pufferkondensators 5 mit ihrem Ausgang verbindet, wobei beispielsweise ein Pulsweitenmodulations- oder ein Deltasigma-Schaltschema verwendet werden kann. Die Erfindung kann allgemein auch auf andere im technischen Gebiet bekannte Wechselrichter-Topologien angewandt werden, weshalb auf die genaue Funktionsweise der Einspeiseeinheit 4 nicht näher eingegangen werden soll.

Es ist auch möglich, nur eine einzelne Einspeiseeinheit 4 zu verwenden. Der Einsatz mehrerer Einspeiseeinheiten 4 bei einer gegebenen Gesamtleistung des Netzeinspeisewechselrichters 1 hat jedoch eine Verbesserung des Oberwellenspektrums der von dem Netzeinspeisewechselrichter 1 erzeugten Wechselspannung(en) zur Folge, wenn die Einspeiseeinheiten mit unterschiedlichen Taktsignalen betrieben werden. Erfindungsgemäß werden dabei die Taktfrequenzen der einzelnen Taktsignale variiert, zusätzlich können die Taktsignale aber auch unterschiedliche und/oder variierende Phasenbezüge zueinander haben.

Der Taktgenerator 6 erzeugt die jeweiligen Taktsignale für die Einspeiseeinheiten 4 mit durch Frequenzvorgaben vorgegebenen Taktfrequenzen. Die Frequenzvorgaben werden von einer Frequenzvorgabeeinheit 7 erzeugt. Erfindungsgemäß wird die Taktfrequenz jedes Taktsignals durch entsprechende von der Frequenzvorgabeeinheit 7 erzeugte Frequenzvorgaben zwischen einer unteren Grenzfrequenz und einer oberen Grenzfrequenz variiert. Die Variation kann dabei auf verschiedene Arten erfolgen, wie oben bereits erklärt wurde. Im Folgenden werden einige konkrete Beispiele erläutert.

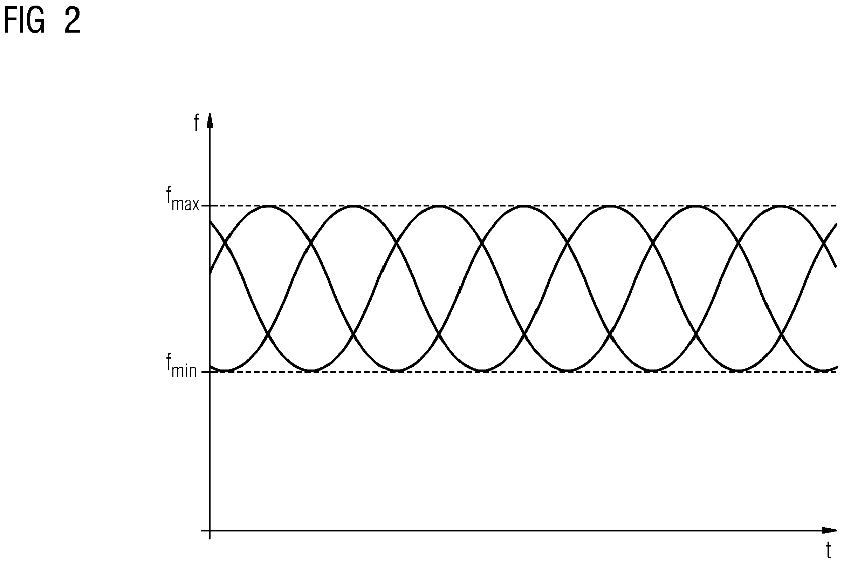

Figur 2 zeigt ein erstes Transientendiagramm mit beispielhaften Frequenzvorgaben. In dem Diagramm sind die Taktfrequenzen f für drei parallelgeschaltete Einspeiseeinheiten 4 eines entsprechend konfigurierten Netzeinspeisewechselrichters über der Zeit t aufgetragen. Die einzelnen Taktfrequenzen variieren sinusförmig zwischen einer unteren Grenzfrequenz $f_{min}$ und einer oberen Grenzfrequenz $f_{max}$. Dabei erreichen die jeweiligen Taktfrequenzen die beiden Grenzfrequenzen zu unterschiedlichen Zeitpunkten, sind also zeitlich gegeneinander verschoben. Nur zu einzelnen Momenten werden jeweils zwei der drei Einspeiseeinheiten mit identischen Taktfrequenzen betrieben, nämlich an den Kreuzungspunkten der sinusförmigen Kurven der Figur 2. Ansonsten unterscheiden sich die Taktfrequenzen aller Einspeiseeinheiten voneinander.

In einer dreiphasigen Ausführung des Netzeinspeisewechselrichters könnten entweder weitere Taktfrequenzsignale zur Steuerung der weiteren Einspeiseeinheiten vorgesehen sein, oder aber die drei gezeigten Taktfrequenzsignale für die jeweiligen Einspeiseeinheiten aller drei Phasen verwendet werden.

Ein Sinus stellt im Frequenzspektrum einen einzelnen Punkt oder auch Spike dar. Die unerwünschten Oberwellen in dem von der Einspeiseeinheit erzeugten Wechselstrom stellen im Wesentlichen Harmonische der Taktfrequenz dar. Wird nun die Taktfrequenz sinusförmig zwischen den genannten Grenzen variiert, verschieben sich auch die Frequenzen der Oberwellen entsprechend, so dass deren Energie über das Spektrum verteilt wird. Dadurch wird insgesamt ein gleichmäßigeres Spektrum erzeugt, das den Anforderungen der Netzbetreiber besser entspricht und den Einsatz von Netzfiltern überflüssig macht oder wenigstens weniger aufwendige Netzfilter erfordert.

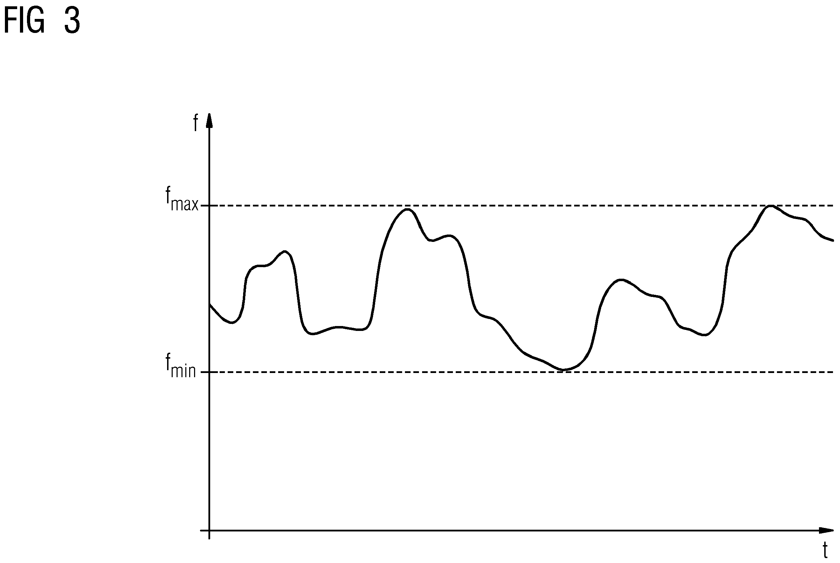

Figur 3 zeigt ein zweites Transientendiagramm mit einer beispielhaften Frequenzvorgabe, das als Alternative zu einer sinusförmigen Variierung der Taktfrequenz verwendet werden kann. Der Verlauf der Taktfrequenz ist hierbei lediglich beispielhaft dargestellt und soll pseudozufällig sein. Das bedeutet, dass sich der Verlauf der Taktfrequenz periodisch wiederholt, aber in jeder Periode einen scheinbar zufälligen, in Wahrheit jedoch deterministischen Verlauf besitzt. Entsprechende Techniken und Generatoren zur Erzeugung pseudozufälliger Signale sind allgemein bekannt. Je länger die Periodizität des pseudozufälligen Signals, desto ähnlicher werden seine spektralen Eigenschaften denjenigen eines echt zufälligen Signals. Ein echt zufälliges Signal besitzt eine gleichmäßige Energieverteilung über das Spektrum, was sich in einer entsprechend gleichmäßigen Verteilung der Oberwellen auswirkt, wenn eine Einspeiseeinheit mit einem solchen Taktsignal betrieben wird. Beim Einsatz mehrerer parallelgeschalteter Einspeiseeinheiten kann die gleiche pseudozufällige Frequenzvorgabe mit einer entsprechenden jeweiligen zeitlichen Verschiebung für die verschiedenen Einspeiseeinheiten verwendet werden.

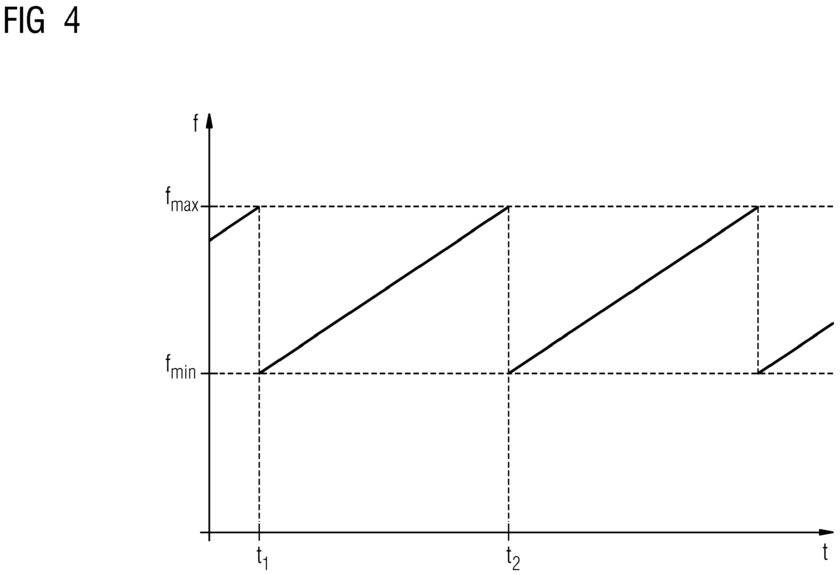

Figur 4 zeigt ein drittes Transientendiagramm mit einer beispielhaften Frequenzvorgabe. Bei diesem Beispiel wird die Frequenzvorgabe innerhalb einer Zeitspanne $t_2$ - $t_1$ linear zwischen der unteren Grenzfrequenz und der oberen Grenzfrequenz variiert. Dies ist ein einfacher Ansatz, um zu erreichen, dass die Frequenzvorgabe den Bereich zwischen der unteren und der oberen Grenzfrequenz möglichst gleichmäßig überstreicht, was ebenfalls eine besonders gleichmäßige Verteilung der Oberschwingungen bewirkt. Diese Eigenschaft kann auch mit einer pseudozufälligen Frequenzvorgabe erreicht werden, bei der alle Werte der Frequenzvorgabe gleich häufig in einer Periode vorkommen. Die Zeitspanne $t_2$ - $t_1$ kann beispielsweise eine oder zwei Sekunden betragen, wodurch einerseits sichergestellt wird, dass die Taktfrequenz mit einer hohen Granularität angepasst wird, andererseits die Oberwellen hinreichend schnell über das Spektrum verteilt werden.

Die Erfindung wurde anhand von Abbildungen von Beispielen näher beschrieben. Die Erfindung ist jedoch nicht durch die Beispiele beschränkt, sondern wird ausschließlich durch die nachfolgenden Ansprüche definiert.

Bezugszeichenliste

1    Netzeinspeisewechselrichter
2    Photovoltaik-Panel
3    Versorgungsnetz
4    Netzeinspeiseeinheit
5    Pufferkondensator
6    Taktgenerator
7    Frequenzvorgabeeinheit
8    DC/DC-Steller

**Patentansprüche**

1. Ein Netzeinspeisewechselrichter (1) mit einem Anschluss für wenigstens eine Gleichspannungsquelle (2), einem Pufferkondensator (5), der ausgebildet ist, über den Anschluss empfangene elektrische Energie zu puffern, und wenigstens einer mit dem Pufferkondensator (5) und einem Taktgenerator (6) verbundenen Netzeinspeiseeinheit (4), welche ausgebildet ist, in dem Pufferkondensator (5) gepufferte elektrische Energie durch ein von dem Taktgenerator (6) erzeugtes Taktsignal mit einer Taktfrequenz getaktet in eine Wechselspannung wechselzurichten und in ein Versorgungsnetz (3) einzuspeisen, wobei der Taktgenerator (6) dazu ausgebildet ist, die Taktfrequenz gemäß einer Frequenzvorgabe zu erzeugen, **gekennzeic hnet durch** eine mit dem Taktgenerator (6) verbundene Frequenzvorgabeeinheit (7), welche dazu ausgebildet ist, eine zwischen einer unteren Grenzfrequenz ($f_{min}$) und einer oberen Grenzfrequenz ($f_{max}$) variierende Frequenzvorgabe (f) an den Taktgenerator (6) auszugeben.

2. Der Netzeinspeisewechselrichter (1) des vorhergehenden Anspruchs, bei dem die Frequenzvorgabeeinheit (7) dazu ausgebildet ist, die Frequenzvorgabe (f) sinusförmig zwischen der unteren Grenzfrequenz ($f_{min}$) und der oberen Grenzfrequenz ($f_{max}$) zu variieren.

3. Der Netzeinspeisewechselrichter (1) von Anspruch 1, bei dem die Frequenzvorgabeeinheit (7) dazu ausgebildet ist, die Frequenzvorgabe (f) zufällig oder pseudozufällig zwischen der unteren Grenzfrequenz ($f_{min}$) und der oberen Grenzfrequenz ($f_{max}$) zu variieren.

4. Der Netzeinspeisewechselrichter (1) eines der vorhergehenden Ansprüche, bei dem die Frequenzvorgabeeinheit (7) dazu ausgebildet ist, die Frequenzvorgabe (f) einen Frequenzbereich zwischen der unteren Grenzfrequenz ($f_{min}$) und der oberen Grenzfrequenz ($f_{max}$) in einer Zeitspanne von 2 Sekunden wenigstens einmal überstreichen zu lassen.

5. Der Netzeinspeisewechselrichter (1) eines der vorhergehenden Ansprüche, bei dem die obere Grenzfrequenz ($f_{max}$) wenigstens 500 Hertz höher ist als die untere Grenzfrequenz ($f_{min}$).

6. Der Netzeinspeisewechselrichter (1) des vorhergehenden Anspruchs, bei dem die obere Grenzfrequenz ($f_{max}$) wenigstens $\dfrac{7500\,Hz}{2 \cdot ceil\left(\frac{75\,kHz}{f_{min}} - \frac{1}{2}\right) + 1}$ höher ist als die untere Grenzfrequenz ($f_{min}$).

7. Der Netzeinspeisewechselrichter (1) eines der vorhergehenden Ansprüche, bei dem die obere Grenzfrequenz ($f_{max}$) höchstens 7500 Hertz höher ist als die untere Grenzfrequenz ($f_{min}$).

8. Der Netzeinspeisewechselrichter (1) eines der vorhergehenden Ansprüche, bei dem die obere Grenzfrequenz ($f_{max}$) kleiner als $\dfrac{150\,kHz}{n}$ und größer als $\dfrac{150\,kHz}{n} - 2\,kHz$ ist, wobei n eine ganze Zahl größer als 0 und kleiner als 13 ist.

9. Der Netzeinspeisewechselrichter (1) eines der vorhergehenden Ansprüche, mit mehreren Netzeinspeiseeinheiten (4), deren Ausgänge miteinander verbunden sind, wobei der Taktgenerator (6) dazu ausgebildet ist, jeder der Netzeinspeiseeinheiten (4) ein jeweiliges Taktsignal gemäß einer jeweiligen Frequenzvorgabe (f) bereitzustellen, und wobei die Frequenzvorgabeeinheit (7) dazu ausgebildet ist, die jeweiligen Frequenzvorgaben (f) zwischen der unteren Grenzfrequenz ($f_{min}$) und der oberen Grenzfrequenz ($f_{max}$) variierend an den Taktgenerator (6) auszugeben und jede jeweilige Frequenzvorgabe (f) mit einem jeweiligen zeitlichen Verlauf, der sich von den zeitlichen Verläufen der anderen Frequenzvorgaben (f) unterscheidet, zu variieren.

10. Der Netzeinspeisewechselrichter (1) des vorhergehenden Anspruchs, bei dem die jeweiligen zeitlichen Verläufe zueinander zeitlich verschoben sind.

11. Der Netzeinspeisewechselrichter (1) des vorhergehenden Anspruchs, bei dem die jeweiligen Taktsignale zueinander phasenverschoben sind.

12. Eine Energieversorgungsanlage mit einem Netzeinspeisewechselrichter (1) gemäß einem der vorhergehenden Ansprüche und wenigstens einer mit dem Anschluss des Netzeinspeisewechselrichters (1) verbundenen Gleichspannungsquelle (2).

13. Die Energieversorgungsanlage des vorhergehenden Anspruchs, bei der die wenigstens eine Gleichspannungsquelle (2) wenigstens ein Photovoltaik-Panel (2) und/oder eine Batterie umfasst.

FIG 1

# FIG 2

EP 3 972 112 A1

FIG 3

EP 3 972 112 A1

FIG 4

EP 3 972 112 A1

Europäisches
Patentamt

European
Patent Office

Office européen
des brevets

**EUROPÄISCHER RECHERCHENBERICHT**

Nummer der Anmeldung

**EP 21 19 6771**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2017/294852 A1 (CORREA VASQUES PABLO IGNACIO [DE] ET AL) 12. Oktober 2017 (2017-10-12) * das ganze Dokument * ----- | 1-13 | INV. H02M7/48 H02M7/53 H02M7/5395 H02M1/44 |
| A | US 2019/123637 A1 (WANG BIN [CN]) 25. April 2019 (2019-04-25) * Absatz [0067]; Abbildung 5 * ----- | 1-13 | H02M1/12 H02M7/493 |
| A | EP 1 850 466 B1 (NISSAN MOTOR [JP]) 18. Juli 2018 (2018-07-18) * das ganze Dokument * ----- | 1-13 | |
| A | JP 2004 312922 A (TOYOTA MOTOR CORP) 4. November 2004 (2004-11-04) * das ganze Dokument * ----- | 1-13 | |
| A | WO 2018/093848 A1 (SCHNEIDER ELECTRIC SOLAR INVERTERS USA INC [US]) 24. Mai 2018 (2018-05-24) * Seite 2, Zeilen 19-28; Abbildung 2 * ----- | 1-13 | **RECHERCHIERTE SACHGEBIETE (IPC)** |
| A | US 2016/077142 A1 (KANAYAMA FUMIAKI [JP] ET AL) 17. März 2016 (2016-03-17) * Absätze [0063] - [0070]; Abbildungen 1-4 * * Absätze [0249] - [0295]; Abbildungen 28-30 * * Absätze [0296] - [0312]; Abbildungen 31, 32 * ----- | 1-13 | H02M |
| A | US 5 625 542 A (STEMMLER HERBERT [CH] ET AL) 29. April 1997 (1997-04-29) * Spalte 2, Zeile 66; Abbildungen 1,2 * ----- | 1-13 | |

Der vorliegende Recherchenbericht wurde für alle Patentansprüche erstellt

| Recherchenort | Abschlußdatum der Recherche | Prüfer |
|---|---|---|
| **Den Haag** | **27. Januar 2022** | **van Wesenbeeck, R** |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 21 19 6771

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-01-2022

| Im Recherchenbericht angeführtes Patentdokument | Datum der Veröffentlichung | Mitglied(er) der Patentfamilie | Datum der Veröffentlichung |
|---|---|---|---|
| US 2017294852 A1 | 12-10-2017 | CN 107112921 A | 29-08-2017 |
| | | DE 102014119502 B3 | 24-03-2016 |
| | | EP 3183809 A1 | 28-06-2017 |
| | | JP 6630358 B2 | 15-01-2020 |
| | | JP 2017539192 A | 28-12-2017 |
| | | US 2017294852 A1 | 12-10-2017 |
| | | WO 2016102266 A1 | 30-06-2016 |
| US 2019123637 A1 | 25-04-2019 | CN 105958814 A | 21-09-2016 |
| | | US 2019123637 A1 | 25-04-2019 |
| | | WO 2017215189 A1 | 21-12-2017 |
| EP 1850466 B1 | 18-07-2018 | CN 101064491 A | 31-10-2007 |
| | | EP 1850466 A2 | 31-10-2007 |
| | | JP 4811102 B2 | 09-11-2011 |
| | | JP 2007295744 A | 08-11-2007 |
| | | US 2007252625 A1 | 01-11-2007 |
| JP 2004312922 A | 04-11-2004 | KEINE | |
| WO 2018093848 A1 | 24-05-2018 | AU 2017362229 A1 | 27-06-2019 |
| | | EP 3542455 A1 | 25-09-2019 |
| | | US 2019319549 A1 | 17-10-2019 |
| | | US 2021175820 A1 | 10-06-2021 |
| | | US 2021359619 A1 | 18-11-2021 |
| | | WO 2018093848 A1 | 24-05-2018 |
| US 2016077142 A1 | 17-03-2016 | JP 2016063581 A | 25-04-2016 |
| | | US 2016077142 A1 | 17-03-2016 |
| US 5625542 A | 29-04-1997 | AT 183860 T | 15-09-1999 |
| | | BR 9502659 A | 02-01-1996 |
| | | CA 2149112 A1 | 04-12-1995 |
| | | CN 1115919 A | 31-01-1996 |
| | | EP 0685923 A1 | 06-12-1995 |
| | | FI 952639 A | 04-12-1995 |
| | | HK 1018581 A1 | 24-12-1999 |
| | | JP H07337089 A | 22-12-1995 |
| | | US 5625542 A | 29-04-1997 |

EPO FORM P0461

Für nähere Einzelheiten zu diesem Anhang : siehe Amtsblatt des Europäischen Patentamts, Nr.12/82